# EUROPÄISCHE PATENTSCHRIFT

(11) **EP 0 558 453 B1**
(45) Veröffentlichungstag und Bekanntmachung des Hinweises auf die Patenterteilung: **17.01.1996**
(21) Anmeldenummer: 93810111.0
(22) Anmeldetag: 19.02.1993
(51) Int. Cl.: B65B 61/18

(54) **Verfahren zum Befestigen eines wiederverschliessbaren Verschlussbandes an einem Gebinde sowie eine Applikationsvorrichtung zur Durchführung des Verfahrens**
Method of attaching a reclosable closure strap to a package and application device for carrying out the method
Procédé pour attacher à un emballage une bande de fermeture refermable et dispositif d'application pour la mise en oeuvre du procédé

(30) Priorität: 11.01.1993 CH 65/93; 21.02.1992 US 839968
(43) Veröffentlichungstag der Anmeldung: 01.09.1993
(73) Patentinhaber: HR RÜEGG AG, CH-9403 Goldach (CH)
(72) Erfinder: Rüegg, Hermann, CH-9034 Eggersriet (CH); Stolmeier, Robert C., Shelbyville, Indiana 46176 (US)
(74) Vertreter: Gachnang, Hans Rudolf

(56) Entgegenhaltungen:
- EP-A- 0 388 364
- US-A- 5 024 537

## Beschreibung

Gegenstand der Erfindung ist ein Verfahren zum Befestigen eines wiederverschliessbaren Verschlussbandes an einem Gebinde sowie eine zur Durchführung des Verfahrens geeignete Applikationsvorrichtung.

Es ist ein Gebinde bekannt, auf welchem ein wiederverschliessbares, taschenförmiges Verschlussband befestigt ist. Als Verschlussbänder werden sogenannte Zip-Verschlüsse verwendet, die durch Extrudieren hergestellt werden. Verschlussbänder dieser Art sind beispielsweise aus der US-A-5,035,517 oder der EP-A-0 388 364 bekannt. Anstelle von extrudierten Bändern mit einem Nut-/Rippenverschluss könnten selbstverständlich Verschlüsse eingesetzt werden, die unter dem Namen "Velcro" bekannt sind, oder aber auch Reissverschlüsse.

Aus der US-A-5,024,537 ist ein zugeschnittenes, gegenseitig beabstandete Verschlussbänder tragendes Band bekannt. Die Verschlussbänder haften auf dem Band und können bei der Applikation abgelöst werden. Die Herstellung solcher Bänder ist aufwendig, und es ist zudem stets im voraus zu bestimmen, welche Länge und welcher gegenseitige Abstand die Verschlussbänder aufzuweisen haben. Eine kurzfristige Anpassung oder ein Produktewechsel ist damit ausgeschlossen.

Die Aufgabe der Erfindung besteht darin, ein Verfahren und eine Vorrichtung zu schaffen, mit denen es gelingt Verschlussbänder unmittelbar vor deren Applikation zuzuschneiden und seitlich zu verschweissen.

Gelöst wird diese Aufgabe durch ein Verfahren und eine Vorrichtung gemäss den Ansprüchen 1 und 7.

Es gelingt mit dem erfindungsgemässen Verfahren in einfacher Weise, ein endloses Verschlussband zu verwenden und dies unmittelbar vor dessen Applikation in entsprechende Längen zuzuschneiden und auf das Gebinde aufzubringen. Dank des im wesentlichen hitzeunempfindlichen Schutzstreifens, welcher den beleimten Bereich auf dem Verschlussband abdeckt und schützt, kann das Verschlussband ohne Verletzen des Schutzstreifens auf die gewünschte Länge zugeschnitten werden. Die Verwendung einer Ultraschalltrennvorrichtung erlaubt ein kontinuierliches Arbeiten, ohne eine Schwächung des Schutzstreifens in Kauf nehmen zu müssen. Der Schutzstreifen dient auch für den Vorschub des Verschlussbandes zur Applikationsstelle. Durch Verschieben der Trenn-/Schweissvorrichtung kann die Länge des gewünschten Abschnittes des Verschlussbandes eingestellt werden. Auf diese Weise lassen sich unterschiedlich grosse Gebinde und/oder unterschiedlich lange Verschlussbandabschnitte erzeugen und dem Verwendungszweck des Gebindes jederzeit anpassen. Der Schutzstreifen, der auch als Trägerband für das Verschlussband bis zur Applikationsstelle dient, wird durch Umlenkung kurz vor der Applikationsstelle vom Verschlussband abgelöst und aus dem Applikationsbereich weggeführt. Die Beleimung des endlos extrudierten Verschlussbandes kann in einfacher Weise dadurch erreicht werden, dass ein doppelseitig beleimtes Klebeband, das - getragen vom Schutzstreifen - auf dem Markt handelsüblich erhältlich ist, unmittelbar vor dem Auftrennen des Verschlussbandes in die gewünschten Abschnitte auf das Verschlussband aufgebracht wird. Auf diese Weise lässt sich erreichen, dass stets die dem Gebindematerial angepasste Beleimung vorliegt, die eine optimale Haftung ermöglicht. Die Vorratshaltung von beleimtem, schnell alterndem Verschlussband entfällt, ebenso die Vorratshaltung von bereits abgelängten Verschlussbandabschnitten.

Anhand illustrierter Ausführungsbeispiele wird die Erfindung näher erläutert. Es zeigen:
- Figur 1: eine schematische Darstellung einer Applikationsvorrichtung von der Seite,
- Figur 2: eine schematische Darstellung der Vorrichtung zum Zusammenführen des Verschlussbandes mit dem Klebeband,
- Figur 3: eine perspektivische Darstellung des Verschlussbandes
- Figur 4: einen Querschnitt längs Linie IV-IV in Figur 3.

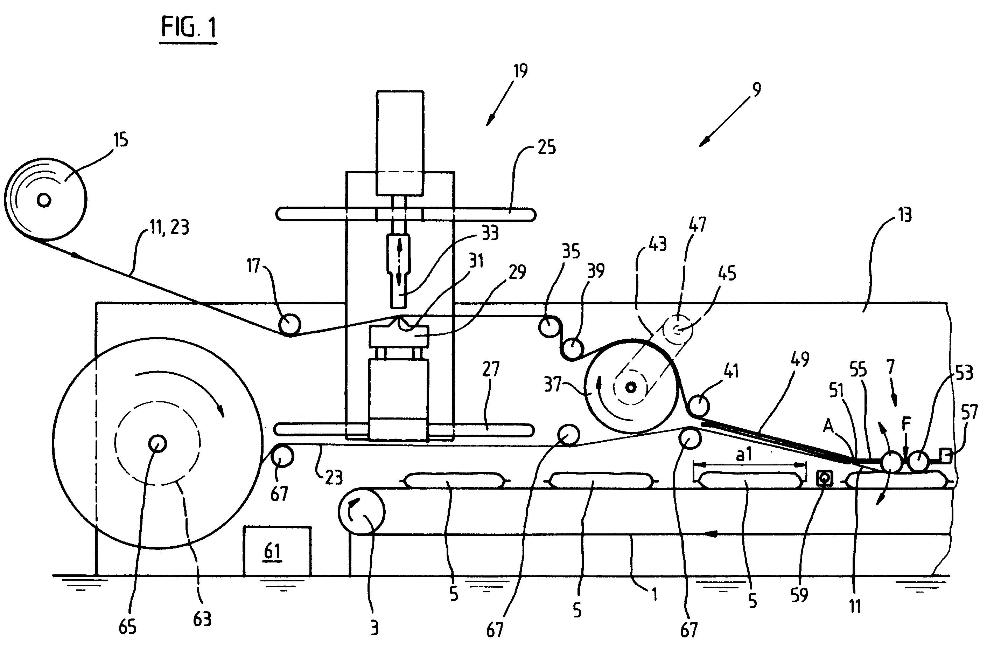

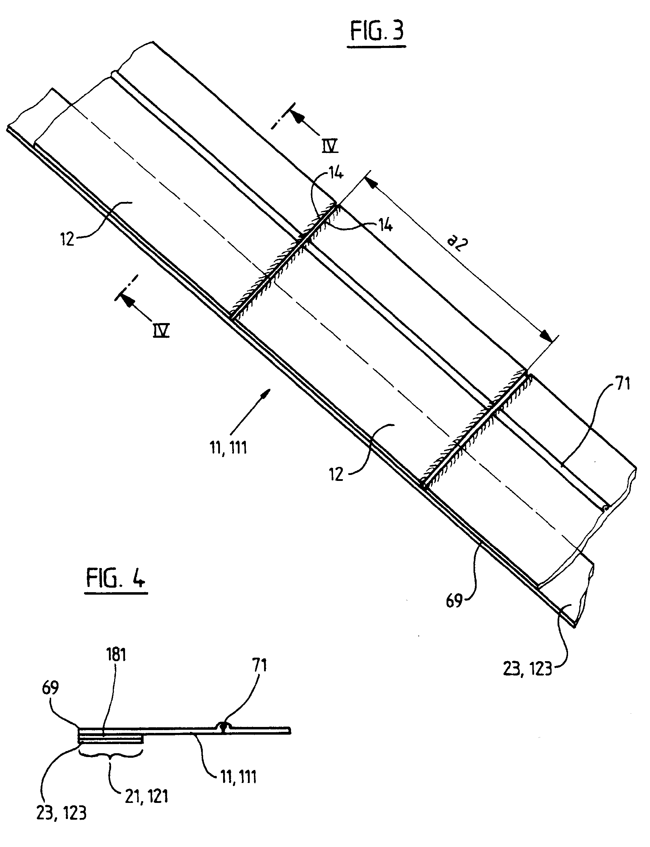

In Figur 1 werden auf einem Förderband 1, das durch Umlenkrollen 3, von denen nur eine sichtbar ist, Gebinde 5, zum Beispiel Säcke aus Papier oder Kunststoffolien gefüllt mit Reis oder anderen Produkten, der Applikationsstelle 7 einer Applikationsanlage 9 für die Applikation von beutelartigen Verschlussbändern 11 zugeführt. Die Applikationsanlage 9 ist auf einem Maschinen-Gestell 13 angeordnet, das sämtliche Teile der Anlage trägt. Von einer Vorratsrolle 15, welche auch ausserhalb des Gestells 13 angeordnet sein kann, wird das endlose Verschlussband 11 über eine Umlenkrolle 17 einer Trenn-/Schweissvorrichtung 19 zugeführt. Das Verschlussband 11 weist einen beleimten Klebebereich 21 auf, der durch einen Schutzstreifen 23 abgedeckt, beziehungsweise geschützt ist (Figuren 3/4). Die Trenn-/Schweissvorrichtung 19 ist längs zweier Führungsschienen oder -nuten 25,27 verschieb- und feststellbar angeordnet und weist eine Gegendruckplatte 29 mit einer Trennkante 31 und einen Ultraschallkopf 33 auf, von denen entweder die Gegendruckplatte und/oder der Ultraschallkopf vertikal gegeneinander verfahrbar angeordnet sind. Das Verschlussband 11 mit dem darauf haftenden Schutzstreifen 23 wird über die Umlenkrolle 17 zwischen der Gegendruckplatte 29 und Trennkante 31 des Ultraschallkopfes 33 hindurch zu einer weiteren Umlenkrolle 35 geführt. Um einen möglichst grossen Umschlingungswinkel und damit eine optimale Haftung an einer Förder- oder Antriebsrolle 37 zu erlangen, wird das Verschlussband 11 um weitere zwei Umlenkrollen 39 und 41 herumgeführt. Der Antrieb der Antriebsrolle 37 erfolgt über einen Antriebsriemen 43, der auf der Abtriebswelle 45 eines Antriebsmotors 47 umläuft. Anstelle eines Riementriebes kann selbstverständlich die Antriebsrolle 37 direkt auf einem Antriebsmotor angeordnet sein (keine Abbildung). Nach dem Umschlingen der zweiten Umlenkrolle 41 gelangt das Verschlussband 11 mit dem darauf haftenden Abdeckstreifen 23 auf eine Führungsplatte 49 mit einer auslaufseitigen Umlenkkante 51. An der Umlenkplatte 49 ist um eine horizontalliegende Achse A schwenkbar an einem Schwenkarm 55 mindestens eine Anpressrolle 53 frei drehbar gelagert. Der die Anpressrolle 53 tragende Schwenkarm 55 kann durch die Kraft F einer nicht dargestellten Feder oder durch eine entsprechend hohe eigene Masse auf das Gebinde 53 aufgepresst werden.

Ein erster Sensor 57 tastet die (Höhen-) Lage des Schwenkarmes 55 ab (Arbeitsstellung etwa horizontal) wie in Figur 1 dargestellt oder in der Ruhestellung abgesenkt (keine Abbildung), wenn kein Gebinde 5 an den Anpressrollen 53 vorbeigeführt wird. Ein zweiter Sensor, zum Beispiel eine Lichtschranke 59, ist dazu vorgesehen, das vordere Ende eines in die Applikationsstelle 7 einfahrenden Gebindes 5 zu erfassen und dessen Anwesenheit an die Maschinensteuerung 61 weiterzuleiten. Ebenfalls am Maschinengestell 13 ist eine von einem Motor 63 angetriebene Spule 65 zur Aufnahme des vom Verschlussband 11 abgelösten Träger- und Abdeckstreifens 23 angeordnet. Der Abdeckstreifen 23 gelangt, nachdem er an der Umlenkkante 51 vom Verschlussband 11 durch die 180°-Umlenkung abgelöst worden ist über mehrere Umlenkrollen 67 unter der Trenn-/Schweissvorrichtung 19 hindurch zur Spule 65 und wird dort aufgewickelt. Zwischen dem Motor 63 und der Spule 65 ist vorzugsweise eine Rutschkupplung eingesetzt, die eine konstante Zugkraft auf den aufzuwickelnden Abdeckstreifen 23 ausübt.

Im folgenden wird die Funktionsweise der Applikationsvorrichtung 9 beschrieben. Sobald ein Gebinde 5, zum Beispiel ein Reissack oder ein Beutel, getragen vom Förderband 1, die Lichtschranke 59 erreicht, wird durch die Maschinensteuerung 61 der Antriebsmotor 47 für die Antriebsrolle 37 in Gang gesetzt und damit der Vorschub des Verschlussbandes 11 aktiviert. Gleichzeitig wird auch der Antrieb des Motors 63 der Spule 65 für den Schutzstreifen 23 in Gang gesetzt und dadurch das Verschlussband 11, das sich bereits nach der Umlenkrolle 41 über der Führungsplatte 49 befindet, vorgeschoben. Sobald sich das Verschlussband 11, das noch vom Schutzstreifen 23 bedeckt ist, über die vordere Umlenkkante 51 der Führungsplatte 49 hinweg bewegt, löst sich der unten liegende Schutzstreifen 23 vom Verschlussband 11 ab. Der nun freigelegte Klebebereich 21, der sich an der Unterseite des Verschlussbandes 11 befindet gelangt, nun in Kontakt mit dem unter der Kante 51 hindurchgeführten Gebinde 5 und wird durch die Anpressrollen 53 auf die Oberfläche des Gebindes 5 aufgepresst.
Damit jeweils nur ein der Länge a1 des Gebindes 5 angepasster Abschnitt des Verschlussbandes 11 auf das Gebinde aufgebracht wird, erfolgt bei der Durchquerung der Trenn-/Schweissvorrichtung 19 eine Ablängung des Verschlussbandes 11 auf die Länge a2. Dazu wird während der Stillstandzeit des Vorschubes für das Verschlussband 11, das heisst wenn jeweils kein Gebinde 5 unter der Applikationsstelle 7 hindurchgeführt wird, eine Durchtrennung des Verschlussbandes 11 vorgenommen, ohne dabei den Abdeckstreifen 11 zu beschädigen. Der Abdeckstreifen 23 dient nach der Durchtrennung und Kantenverschweissung des Verschlussbandes 11 als dessen Träger- oder Transportband. Die Trennung nur des Verschlussbandes 11 erfolgt durch den Ultraschallkopf 33, indem dieser aktiviert wird und das Verschlussband 11 auf die Trennkante 31 auffresst und durchschmilzt. Dabei erfolgt nicht nur eine Durchtrennung des Verschlussbandes 11, sondern gleichzeitig eine Verschweissung der bei der Trennung neu entstehenden Kanten 14. Auf diese Weise entstehen seitlich verschweisste beutelförmige Verschlüsse 11 von vorgegebener Länge a2.

Diese vom Abdeckband 23 getragenen und zur Applikationsstelle 7 geförderten Verschlüsse 11 bilden kleine Taschen, da deren Längskanten 69, welche dem Verschlussbandbereich 71 gegenüberliegen, verschweisst sind. Die Verschweissung der Längskanten 69 erfolgt bereits bei der Herstellung des Verschlussbandes 11 und wird daher nicht weiter beschrieben. Der Vorschubweg für das nun nach der Trenn-/Schweissvorrichtung 19 in Abschnitte abgelängte Verschlussband 11, ausgeführt vom Antriebsmotor 47 der Antriebsrolle 37 sowie dem Antriebsmotor 63 der Spule 65, entspricht jeweils der Länge a2. Diese Länge a2, welche - wie bereits gesagt - der Länge a1 des Gebindes 5 angepasst ist, kann durch verschieben der Trenn-/Schweissvorrichtung 19 in einfacher Weise den Gegebenheiten angepasst, d.h. verlängert oder verkürzt werden.

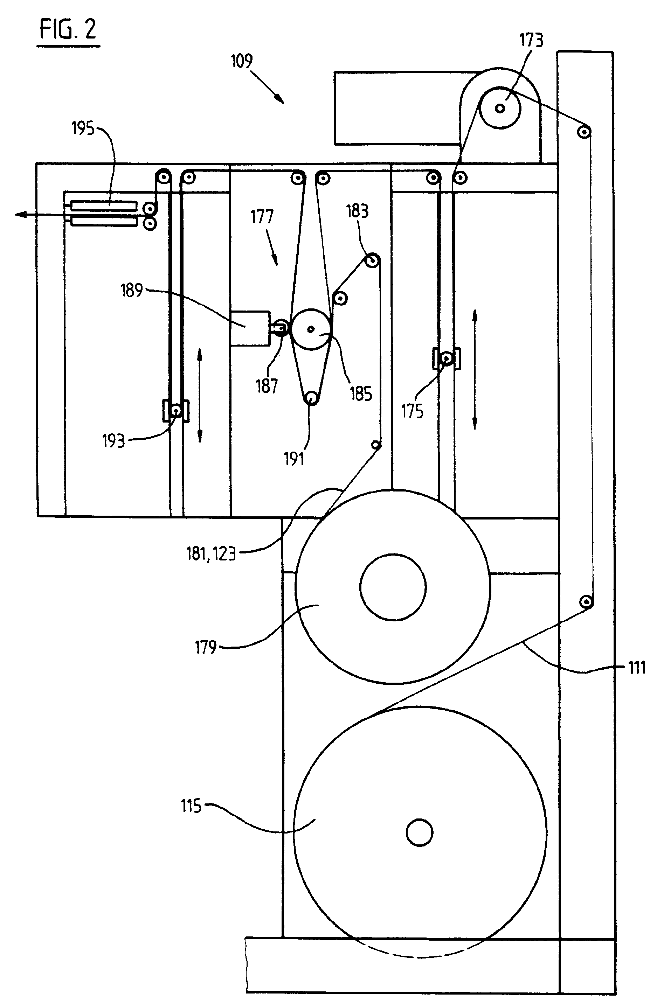

In der Ausgestaltung der Erfindung nach Figur 2 erfolgt das Aufbringen des Klebstoffes im Klebereich 121 erst auf der Applikationsanlage 109 und nicht bereits an anderer Stelle, zum Beispiel beim Hersteller des Verschlussbandes 111.
Auf einer drehbar gelagerten Vorratsrolle 115 wird das Verschlussband 111 ohne Klebebereich und Schutzstreifen 123, wie es vom Extruder geliefert wird, über einen motorisch angetriebenen Bandabwickler 173 abgezogen. Vom Bandabwickler 173 läuft das Verschlussband 111 über eine Tänzerrolle 175, wie sie aus dem Stand der Technik bekannt ist, zu einer Verbindungsstation 177.
Auf einer zweiten, drehbar gelagerten Vorratsrolle 179 ist ein doppelseitig klebendes Klebeband 181 aufgewickelt, dessen eine Seite durch einen Abdeckstreifen oder Schutzstreifen 123 abgedeckt ist. Von der Vorratsrolle 179 gelangt das Klebeband 181 über eine oder mehrere Umlenkrollen 183 ebenfalls in die Verbindungsstation 177. In der Verbindungsstation 177, die im wesentlichen aus einer Stützrolle 185 und einer Anpressrolle 187 besteht, werden die beiden Teile untereinander verbunden. Die Anpressrolle 187 ist elastisch federnd in einer Haltevorrichtung 189 gegen die Stützrolle 185 anpressbar gehalten.

Damit eine möglichst geringe Umschlingung der Stützrolle 185 im Bereich der Anpressung des Klebebandes 181 an das Verschlussband 111 erreicht werden kann, um ein Verwerfen der beiden miteinander zu verbindenden Teile bei der nachträglichen Streckung zu verhindern, ist unterhalb der Stützrolle 185 eine weitere Umlenkrolle 191 angeordnet.

Nach der Vereinigung der beiden Bänder, nämlich dem Verschlussband 111 und dem Klebeband 181, wird das nun einen Klebebereich aufweisende Band 121 über eine weitere Tänzerrolle 193 zu einer Heizvorrichtung 195 geführt. Von dort gelangt das nun mit dem Klebebereich 121 versehene Verschlussband 111 zur Trennstation wie sie in Figur 1 mit Bezugszeichen 19 bezeichnet ist.

In einer weiteren, nicht dargestellten Ausführung der Erfindung wird anstelle eines Klebebandes flüssiger Kleber auf das Verschlussband aufgebracht und nachträglich mit einem sich mit der Klebeschicht nicht verbindenden Abdeckstreifen abgedeckt. Der Abdeckstreifen ist auch hier notwendig, damit das Verschlussband, nachdem es auf der Trenn-/Schweissvorrichtung in vorgegebenen Längen a unterteilt worden ist, zu der Applikationsstelle weitertransportiert werden kann.

## Patentansprüche

1. Verfahren zum Befestigen eines wiederverschliessbaren Verschlussbandes (11,111) an einem Gebinde (5), bei dem
- ein endloses Verschlussband (11) auf einer Vorratsrolle (15;115;179) gespeichert ist und einen beleimten Klebebereich aufweist, der durch einen Schutzstreifen (23,123) geschützt ist, oder das Verschlußband nach dem Abziehen von der Vorratsrolle (15) mit einem Klebebereich und einem Schutzstreifen (23,123) versehen wird,
- das Verschlussband (11,111) mit dem Schutzstreifen (23,123) abgezogen,
- eine vorgegebene Länge (a) abgemessen und abgelängt wird,
- der abgelängte Abschnitt (12) des Verschlussbandes (11,111) an den vor-und nachlaufenden Enden eines Verschlußband abschnittes verschweißt und vom nachfolgenden abgetrennt wird und
- der abgelängte Abschnitt (12) auf dem nicht abgetrennten, mit der Vorratsrolle (15;115,179) und einer Aufnahmespule (65) verbundenen Schutzstreifen (23,123) an eine Applikationsstelle (7) herangeführt wird,
dadurch gekennzeichnet, dass
- das Verschlussband (11,111) mit einer Ultraschall- oder Heizstab-Trenn-/Schweissvorrichtung (19) durchtrennt und die entstehenden übereinanderliegenden Kanten (14) miteinander verschweisst werden,
- der Schutzstreifen beim Durchtrennen unbeschädigt erhalten bleibt,
- der Schutzstreifen (23,123) vom vorlaufenden Abschnitt (12) abgelöst wird und
- der Abschnitt (12) mit dem freigelegten beleimten Bereich auf das Gebinde (5) aufgepresst wird.

2. Verfahren nach Anspruch 1, dadurch gekennzeichnet, dass der Schutzstreifen (23,123) durch eine Umlenkung um eine Kante (51) um mindestens 90° vom beleimten Bereich (21,121) abgelöst und aufgewickelt wird.

3. Verfahren nach einem der Ansprüche 1 oder 2, dadurch gekennzeichnet, dass der Vorschub des ungetrennten Verschlussbandes (11,111) und der abgelängten Abschnitte (12) durch den Abzug für den Schutzstreifen (23.123) und/oder durch eine Vorschubrolle (37) erfolgt.

4. Verfahren nach einem der Ansprüche 2 oder 3, dadurch gekennzeichnet, dass die Schneidevorrichtung (19) zur Einstellung der Länge (a2) der Abschnitte (12) zur Transportrichtung des Verschlussbandes (11,111) verschiebbar ist.

5. Verfahren nach einem der Ansprüche 1 bis 4, dadurch gekennzeichnet, dass die Beleimung (21,121) des Verschlussbandes (11,111) und das Aufbringen des Schutzstreifens (23,123) auf die Beleimung (21,121) unmittelbar vor dem Ablängen der Abschnitte (12) erfolgt.

6. Verfahren nach Anspruch 5, dadurch gekennzeichnet, dass die Beleimung (21,121) durch ein doppelseitiges Klebeband (181) erfolgt, das auf dem Schutzstreifen (23,123) aufgebracht dem Verschlussband (11,111) zugeführt und mit diesem durch Pressen verbunden wird.

7. Applikationsvorrichtung für ein wiederverschliessbares Verschlussband (11,111) auf ein Gebinde (5), bei dem ein endloses Verschlußband auf einer Vorratsrolle (15,115,179) gespeichert ist und einen beleimten Klebebereich aufweist, der durch einen Schutzstreifen (23,123) geschützt ist oder das Verschlußband nach dem Abziehen von der Vorratsrolle mit einem Klebebereich, und einem Schutzstreifen (23,123) versehen wird, das Verschlußband mit dem Schutzstriefen abgezogen, eine vorgegebene Länge (a) abgemessen und abgelängt wird, der abgelängte Abschnitt (12) des Verschlußbandes (11,111) an den vor- und nachlaufenden Enden eines Verschlußbandabschnitts verschweißt und vom nachfolgenden abgetrennt wird und der abgelängte Abschnitt auf dem nicht abgetrennten, mit der Vorratsrolle und einer Aufnahmespule (65) verbundenen Schutzstreifen (23,123) an eine Applikationsstation (7) herangeführt wird, dadurch gekennzeichnet, dass vor der Applikationsstelle (7) eine Trenn-/Schweissvorrichtung (19) zum Durchtrennen und Verschweissen der entstehenden übereinanderliegen den Kanten (14) vorgesehen ist, durch die ausschließlich das Verschlussband (11,111), nicht jedoch der Abdeckstreifen (23,123) durchtrennt wird, dass zum Transport der Gebinde (5) zur Applikationsstation (7) ein Fördermittel (1) unterhalb der Applikationsstation (7) angeordnet ist, dass vor der Applikationsstation (7) eine Umlenkplatte (49) und in Förderrichtung daran anschliessend Anpressmittel (53) zum Anpressen der mit einem Klebebereich (21,121) versehenen Abschnitte (12) des Verschlussbandes (11,111) an das Gebinde (5) angeordnet sind.

8. Applikationsvorrichtung nach Anspruch 7, dadurch gekennzeichnet, dass in der Trenn-/Schweissvorrichtung (19) eine Ultraschallsonde (33) zum Auftrennen und zugleich zum Verschmelzen der Kanten (14) des Verschlussbandes (11,111) eingesetzt wird.

9. Applikationsvorrichtung nach einem der Ansprüche 7 oder 8, dadurch gekennzeichnet, dass der Klebebereich (21,121) vor der Trenn-/Schweissvorrichtung (19) in Gestalt eines doppelseitigen Klebebandes, das einseitig von einem Abdeckstreifen (23,123) geschützt ist, von einer Vorratsrolle (179) abgezogen und durch eine Pressrolle (187) auf das, von einer zweiten Vorratsrolle (115) abgezogene Verschlussband (111) aufgepresst wird.

## Claims

1. Method of securing a reclosable closure strap (11, 111) on a package (5), wherein
- an endless closure strap (11) is stored on a supply reel (15, 115, 179) and has a glued adhesive region which is protected by a protective strip (23, 123), or the closure strap is provided with an adhesive region and a protective strip (23, 123) after being drawn from the supply reel (15),
- the closure strap (11, 111) is drawn with the protective strip (23, 123),
- a prescribed length (a) is measured and cut,
- the cut portion (12) of the closure strap (11, 111) is welded to the front and rear ends of a closure strap portion and severed from the subsequent portion, and
- the cut portion (12) is supplied to an application station (7) on the non-severed protective strip (23, 123), which is connected to the supply reel (15, 115, 179) and a take-up spool (65), characterised in that
- the closure strap (11, 111) is severed with an ultrasonic or heating rod severing-cum-welding device (19), and the resultant edges (14) lying one above the other are welded together,
- the protective strip remains undamaged during the severing process,
- the protective strip (23, 123) is detached from the front portion (12), and
- the portion (12), having the exposed glued region, is pressed onto the package (5).

2. Method according to claim 1, characterised in that the protective strip (23, 123) is detached from the glued region (21, 121) by being guided around an edge (51) through at least 90° and wound-up.

3. Method according to one of claims 1 or 2, characterised in that the non-severed closure strap (11, 111) and the cut portions (12) are advanced by the drawing movement for the protective strip (23, 123) and/or by a feed roller (37).

4. Method according to one of claims 2 or 3, characterised in that the cutting device (19) is displaceable relative to the direction of conveyance of the closure strap (11, 111) for the adjustment of the length (a2) of the portions (12).

5. Method according to one of claims 1 to 4, characterised in that, immediately prior to the portions (12) being cut to length, the closure strap (11, 111) is glued (21, 121) and the protective strip (23, 123) is applied to the glued region (21, 121).

6. Method according to claim 5, characterised in that the gluing (21, 121) is effected by a double-sided adhesive strap (181) which is applied to the protective strip (23, 123), supplied to the closure strap (11, 111) and joined thereto by pressure.

7. Application device for applying a reclosable closure strap (11, 111) to a package (5), wherein an endless closure strap is stored on a supply reel (15, 115, 179) and has a glued adhesive region which is protected by a protective strip (23, 123), or the closure strap is provided with an adhesive region and a protective strip (23, 123) after being drawn from the supply reel (15), the closure strap is drawn with the protective strip, a prescribed length (a) is measured and cut, the cut portion (12) of the closure strap (11, 111) is welded to the front and rear ends of a closure strap portion and severed from the subsequent portion, and the cut portion is supplied to an application station (7) on the non-severed protective strip (23, 123), which is connected to the supply reel and a take-up spool (65), characterised in that a severing-cum-welding device (19) is provided in front of the application station (7) for severing and welding the resultant edges (14) lying one above the other, said device exclusively severing the closure strap (11, 111), but not the cover strip (23, 123), in that a conveyor means (1) is disposed beneath the application station (7) for conveying the package (5) to the application station (7), in that a guide plate (49) and compression means (53), which follow said plate when viewed with respect to the direction of conveyance, are disposed in front of the application station (7), said compression means serving to press the portions (12) of the closure strap (11, 111), which are provided with an adhesive region (21, 121), onto the package (5).

8. Application device according to claim 7, characterised in that an ultrasonic probe (33) is inserted in the severing-cum-welding device (19) for severing and simultaneously for fusing the edges (14) of the closure strap (11, 111).

9. Application device according to one of claims 7 or 8, characterised in that the adhesive region (21, 121) in front of the severing-cum-welding device (19) is drawn from a supply reel (179) in the form of a double-sided adhesive strap, which is protected on one side by a cover strip (23, 123), and is pressed onto the closure strap (111) by a pressure roller (187), said closure strap being drawn from a second supply reel (115).

## Revendications

1. Procédé pour fixer une bande de fermeture refermable (11,111) sur un emballage (5),
- en utilisant une bande de fermeture sans fin (11) enroulée en attente sur une bobine d'alimentation (15,115 ; 179), cette bande présentant une zone de collage déjà enduite et recouverte par une bande de protection (23,123), ou en réalisant sur la bande de fermeture déroulée de sa bobine d'alimentation (15) une zone de collage recouverte par une bande de protection (23,123),
- en prenant une longueur suffisante de la bande de fermeture (11,111) associée à sa bande de protection (23,123),
- en mesurant une longueur prédéterminée (a) et en découpant un morceau de la bande à cette longueur,
- en prenant ce morceau (12) découpé à la longueur voulue de la bande de fermeture (11,111) pour ourler par soudage son extrémité antérieure et son extrémité postérieure, en séparant ce morceau (12) du morceau suivant,
- et en utilisant la bande de protection (23,123) qui n'a pas été sectionnée et qui est reliée à la bobine d'alimentation (15 ; 115,179) et à une bobine de reprise (65), pour porter le morceau (12) découpé à la longueur voulue, et l'amener jusqu'à un poste d'application (7),
caractérisé en ce que :
- on découpe la bande de fermeture (11,111) au moyen d'un appareil (19) de découpage et de soudage, à ultrasons ou à baguette chaude, et en ce qu'on soude ensemble les bords superposés (14) ainsi réalisés par découpage,
- on effectue ce découpage en laissant intacte la bande de protection (23,123),
- et on sépare ensuite la bande de protection (23,123) du morceau précédent (12), et
- on applique énergiquement sur l'emballage (5) le morceau (12) présentant une zone encollée ainsi mise à nue .

2. Procédé selon la revendication 1, caractérisé en ce qu'on sépare la bande de protection (23,123) de la zone encollée (21,121) par un changement de direction d'au moins 90° sur une arête de déflexion (51), et en ce qu'on enroule ensuite cette bande sur une bobine de reprise.

3. Procédé selon l'une des revendications 1 ou 2, caractérisé en ce qu'on commande le mouvement d'avance de la bande de fermeture (11,111) avant son découpage ainsi que le mouvement d'avance des morceaux (12) de la bande découpés à la longueur voulue grâce au mouvement d'avance de la bande de protection (23,123) et/ou au moyen d'un rouleau d'entraînement (37).

4. Procédé selon l'une des revendications 2 ou 3, caractérisé en ce que le dispositif de découpage (19) servant à découper à la longueur voulue (a2) les morceaux (12) est monté à coulisse dans le sens du mouvement d'avance de la bande de fermeture (11,111).

5. Procédé selon l'une des revendications 1 à 4, caractérisé en ce qu'on effectue l'encollage (21,121) de la bande de fermeture (11,111) et l'application de la bande de protection (23,123) sur la partie encollée (21,121) immédiatement avant le découpage des morceaux (12) à la longueur voulue.

6. Procédé selon la revendication 5, caractérisé en ce qu'on réalise les zones de collage (21,121) au moyen d'une bande adhésive (181) enduite sur ses deux faces, que l'on applique sur la bande de protection (23,123) avant de l'amener sur la bande de fermeture (11,111) et de la fixer sur celle-ci par un effet de pression.

7. Dispositif d'application pour fixer une bande de fermeture refermable (11,111) sur un emballage (5), en prenant une bande de fermeture sans fin enroulée en attente sur une bobine d'alimentation (15,115) et présentant une zone encollée qui est recouverte par une bande de protection (23,123), ou en réalisant sur la bande de fermeture déroulée de sa bobine d'alimentation une zone de collage recouverte par une bande de protection (23,123), en utilisant alors cette bande de fermeture avec sa bande de protection pour y mesurer une longueur prédéterminée (a) et y découper un morceau ayant cette longueur, en traitant ensuite ce morceau (12) découpé à la longueur voulue de la bande de fermeture (11,111) pour en ourler par soudage l'extrémité antérieure et l'extrémité postérieure, après quoi on sépare ce morceau du morceau suivant, ce morceau (12) ainsi découpé à la longueur voulue restant alors porté par la bande de protection (23,123) qui n'a pas été découpée et qui est reliée à la bobine d'alimentation (15) et à une bobine de reprise (65), la bande de protection (23,123) servant ainsi à amener le morceau découpé (12) jusqu'à un poste d'application (7), caractérisé en ce qu'il comporte un dispositif (19) de découpage et de soudage, prévu en amont du poste d'application (7), pour découper et souder ensemble les bords superposés (14) résultant du découpage qui affecte uniquement la bande de fermeture (11,111) en laissant intacte la bande de protection (23,123), en ce qu'il comporte au-dessous du poste d'application (7) un système transporteur (1) pour amener les emballages (5) jusqu'à l'endroit du poste d'application (7), et en ce qu'une plaque de déflexion (49) est placée en amont du poste d'application (7), des moyens d'appui sous pression (53) étant prévus ensuite dans le sens du mouvement d'avance pour appliquer sous pression sur un emballage (5) la zone de collage (21,121) de chaque morceau (12) de la bande de fermeture (11,111).

8. Dispositif d'application selon la revendication 7, caractérisé en ce que le dispositif (19) de découpage et de soudage contient une sonde à ultrasons (33) pour découper les morceaux (12) de la bande de fermeture (11,111) en ourlant en même temps par soudage les extrémités (14) des morceaux (12) de la bande (11,111).

9. Dispositif d'application selon l'une des revendications 8 ou 9, caractérisé en ce que la zone de collage (21,121) est réalisée au moyen d'une bande adhésive enduite sur ses deux faces, dont l'une est recouverte par une bande de protection (23,123), cette bande adhésive étant prise sur une bobine d'alimentation (179) avant le passage de la bande dans le dispositif (19) de découpage et de soudage, et cette bande adhésive étant alors appliquée sous pression par un rouleau presseur (187) sur la bande de fermeture (111) déroulée d'une deuxième bobine d'alimentation (115).
